# EUROPEAN PATENT SPECIFICATION

(11) **EP 1 490 843 B1**
(45) Date of publication and mention of the grant of the patent: **30.04.2008**
(21) Application number: 03713154.7
(22) Date of filing: 24.03.2003
(51) Int. Cl.: G07D 11/00, G07F 19/00

(54) **CASH REGISTER SYSTEM FOR ARTICLES LIKE NOTES OR COINS**
REGISTERKASSENSYSTEM FÜR ARTIKEL WIE GELDSCHEINE UND MÜNZEN
SYSTEME DE CAISSE ENREGISTREUSE POUR ARTICLES TELS QUE BILLETS OU PIECES DE MONNAIE

(30) Priority: 02.04.2002 SE 0200986
(43) Date of publication of application: 29.12.2004
(73) Proprietor: Cashguard AB, 183 62 Täby (SE)
(72) Inventor: NORDQVIST, Leif, SE-184 70 Akersberga (SE)
(74) Representative: Winblad, Hans Peter
(86) International application number: PCT/SE2003/000482
(87) International publication number: WO 2003/083787

(56) References cited:
- EP-A2- 0 962 896
- WO-A1-00/21807
- WO-A2-02/47043
- SE-C2- 504 358
- SE-C2- 514 260
- SE-C2- 515 338
- US-A- 5 313 050
- US-A- 5 701 252
- US-A1- 2002 099 634
- US-B1- 6 311 165
- US-B1- 6 356 805
- PATENT ABSTRACTS OF JAPAN vol. 2000, no. 9 13 October 2000 & JP 2000 163618 A (TOSHIBA CORP) 16 June 2000
- PATENT ABSTRACTS OF JAPAN vol. 2000, no. 2 29 February 2000 & JP 11 306 416 A (FUJI ELECTRIC CO LTD) 05 November 1999

## Description

### BACKGROUND TO THE INVENTION

The present invention relates to a system according to the preamble to Claim 1. The invention relates in particular to systems for paying in and paying out money, such as notes and coins, in particular in shop and bank systems. This patent application is concurrent with Swedish patent application no. 0200985-0.

Within the retail industry, the use of checkout systems for paying money in and out is already known. When the checkouts have been filled with money, the money is transferred physically by vehicle to a financial institution, such as a bank. This transportation is time-consuming and involves a large amount of labour.

In certain cases, known technology involves cassettes being filled with money at the checkout in the shop, and being emptied later into a storage device which records the value of the money. A shopkeeper can then transmit the information concerning the value in the cassette direct to the bank. This handling is long-winded and costly.

Moreover, the transmission of the information concerning the deposited value does not take place in real time, which means a loss of interest for the shopkeeper. In addition, the bank has no direct control over the money in the shop that is to be available for the bank's customers to withdraw.

Known systems also suffer from the disadvantage that they involve costly and environmentally-damaging physical transportation of notes and coins between the shop and the bank, with a large input of labour. Known systems are also dependent to a high degree on withdrawal devices being located close to or in association with the bank.

US 5 701 252 discloses a system for storage of notes and coins and also an item recording unit designed to work in conjunction with a central database unit for recording the articles stored. By exchanging information in the system regarding the status of several storage devices an user can be provided with information where the required item is available.

WO02/47043A discloses a system comprising a central system control unit which may be a network server, and a plurality of distributed cash handling devices, which communicate with the system control unit through the wireless network. Those cash handling devices can include automatic cash handling machines such as coin sorters, counters or dispensers and cash redemption centers. The control unit can further communicate with peripheral computer I/O devices such as scanners, printers and remote displays. The system control unit can further monitor overall cash levels and machine operation to maintain appropriate levels of cash in each gaming machine and to prevent machine down time due to high or low cash levels or maintenance problems.

Control of the stocks of notes and coins in, for example, a shop or a chain of shops is also lacking at present Similarly, a large amount of labour is required for the handling of cash, when a customer must first withdraw money from the said withdrawal device in order to make purchases in the shop. The storage of notes and coins, also called items, by the individual shop or a chain of shops according to known technology thus leaves much to be desired.

The connection to a cash register of a cash handling apparatus, of the CashGuard type (registered trademark) as described in EP-A-0 615 643, designed to handle, that is receive and validate, notes and coins in a secure way, is also known. Each note or coin is detected when it is input or issued by an item recording unit comprising detectors and electronic circuits. In this way, the accumulated number of notes and coins in the storage device is recorded. The storage device at a checkout often comprises cassettes with rolling devices for notes, with each cassette being designed to accept notes of the same denomination. In a corresponding way, machines are to be found that are designed for handling coins according to denomination. This equipment works very satisfactorily. Another name for the storage location or storage unit designed for separate denominations is handling unit, which name has been used in the abovementioned concurrent application.

An object of the present invention is to avoid the said disadvantages of known systems described above and to further develop the payment handling apparatus described above.

An additional object of the invention is to achieve a system that provides a shopkeeper with more cost-effective handling of notes and coins in his shop.

The object of the present invention is also to achieve a system for simplifying the handling of coins and notes in both the shop and the bank.

A further object of the invention is to achieve a system that ensures that the individual checkout and/or shop/chain of shops always has at least a stock of coins and notes, with the size of the stock being controlled by predetermined values.

In addition, it is the object of the invention to achieve a system that operates in real time.

A further object is to achieve a system that can supply coins and notes physically to a customer in a shop from the stock of coins and notes.

To achieve these objects, the system according to the present invention is characterized by the characterizing part of Claim 1. By this means, a shopkeeper can have complete control of how large a stock of notes and coins he has in the shop. This means that the shopkeeper's planning, for example, of the purchase of change from a bank, is made easier, which is cost effective.

The central data base unit is preferably arranged to work in conjunction with a computer unit in a remote financial institution, such as a bank or the like, via a data link for transferring output data in real time from the central database unit to the computer unit, which output data comprises information showing the current number of notes and coins stored in the storage device according to denomination.

In this way, a bank can ensure that the number of notes and coins of the respective denominations is sufficiently large to enable the bank's customers to make withdrawals of items. Similarly, the shopkeeper earns interest in real time, by the recording of items via the bank's computer unit.

The point of sale suitably comprises a verification unit designed for the withdrawal of notes and coins from the storage device by customers, which verification unit is arranged to work in conjunction with the control unit for controlling the issuing of notes and coins on the basis of the withdrawal by the customer and can be connected by electronic communication to the remote financial institution for verifying the withdrawal of items by the customer.

In this way, notes and coins can be physically available to a customer without him needing to go to a financial institution. As notes and coins are transported from the storage device in association with withdrawals in the shop and the withdrawn amount is recorded in the bank, the stock of items in the shop is reduced. By this means, the risk of theft is reduced, and also the cost of transportation of items from the shop to the bank and the cost of purchasing notes and coins. Similarly, notes and coins can be physically available to a customer without him needing to go to a bank or a cash machine. As the notes and coins are transported directly from the storage device to the customer, the stock of items in the shop is reduced. By this means, the risk of theft is reduced, and also the cost of transportation of items from the shop to the bank and the cost of purchasing notes and coins. The amount withdrawn is recorded by the bank.

Alternatively, the storage device can comprise storage units, each designed for the currency of the country, state or union, for storing notes and coins according to denomination.

In this way, apparatus at a checkout for handling notes and coins comprising input and output units, within which both receiving and paying out of notes and coins can be carried out, can be used in the present system. A shop's customer does not need, for example, to go to a cash dispenser to withdraw notes, while at the same time the stock of notes in the shop reduces. In this way, notes and coins according to denomination can be transported to and from a customer in a simple way without the person concerned needing to go to a cash dispenser, while at the same time the stock of notes in particular in the shop reduces, which results in lower logistics costs for the shop.

The central database unit is preferably assigned a control unit designed to control the flow of issued notes and coins at the point of sale on the basis of the number of notes and coins currently stored in the storage device.

In this way, transportation of change to a shop can be reduced. Similarly, the need to transport money from the shop to a bank is reduced. Similarly, the risk of theft is reduced and it is better for the environment. At the same time, the shopkeeper gains benefits from the system in that he does not need to buy in notes and coins for the shop as often, which is cost effective.

The control unit is suitably arranged to control the flow of notes and coins out of the respective storage devices in such a way that when the number of notes and coins of a particular denomination increases in number and passes or approaches an upper limit value, the control unit is caused to pay out notes and coins primarily of this denomination when a customer makes a withdrawal.

In that respect, change for paying back to a customer can be controlled in such a way that the number of notes and coins of denominations that have a tendency to increase quickly in number, increases at a slower rate than with checkout systems according to known technology. By this means, the stock of notes and coins can be kept small and the transportation of these to and from the bank can be carried out less frequently. That is to say, when the number of notes of a particular denomination, such as for example SEK 100 notes, passes or approaches the first limit value, which can also be incorporated in a warning system, by means of a purpose-designed computer program the control device and the control unit ensure that SEK 100 notes are issued when the customer makes a withdrawal. In this way, items of denominations that have a tendency to increase in number are issued automatically.

Alternatively, the control unit is arranged to give a warning signal if a lower limit value is passed or approached when the number of notes and coins of a particular denomination reduces in number in the respective storage unit.

In this way, on the basis of this warning signal, the shopkeeper has ample time to prevent a shortage of change, and can obtain information in good time before the storage unit is empty about when it is time to transfer the notes or coins of which there is a shortage from another checkout or from a buffer arrangement, such as a safe.

The storage device is preferably arranged to be able to be emptied of money into a transportation box, via an opening arranged for the said inputting and issuing of each denomination.

The central database is suitably arranged in a shop, such as a food shop or the like.

Alternatively, the central database unit is arranged to work in conjunction with a central server designed for interworking between the shops within a region, with each shop comprising a central database unit.

### BRIEF DESCRIPTION OF DRAWINGS

The invention will be described in the following with reference to the drawings, in which:
Figure 1 shows schematically a system according to the invention according to a first embodiment,
Figures 2a-2c show schematically in diagram form the flow of notes in a shop,
Figure 3 shows schematically a system according to the invention according to a second embodiment,
Figure 4 shows schematically the system in Figure 1 applied at regional level,
Figure 5 shows schematically the system in Figure 4 at shop level,
Figure 6 shows schematically the system's storage devices at the respective checkouts,
Figure 7 shows schematically a flow chart relating to the issuing of items, and
Figure 8 shows schematically a flow chart relating to the replenishing of items.

### DETAILED DESCRIPTION OF THE INVENTION

The invention will now be described in the form of embodiments. For the sake of clarity, components that are not of significance for the invention have been omitted in the drawings.

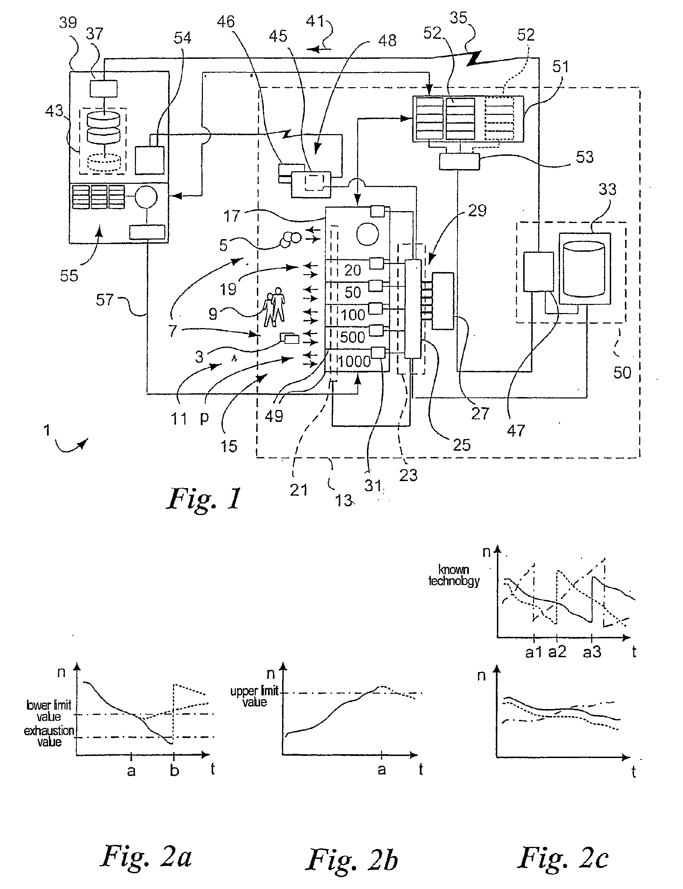

Figure 1 shows schematically a system 1 according to a first embodiment for storing money, such as notes 3 and coins 5, also called items 7, which are transferred to and from customers 9 at at least one point of sale, such as a checkout 11 in a shop 13. The system 1 comprises a storage device 15, comprised in a payment-handling apparatus 17, also called the apparatus, for storing the said items 7 according to denomination.

The apparatus 17 receives and pays out items 7 according to denomination. Previously input items 7, will thus be issued later in connection with the paying out of change and the withdrawal of money, that is to say items 7. The apparatus 17 comprises inputting and issuing units 19, which in turn comprise detectors 21 of the type shown in EP-A-0 615 643. The inputting and issuing of items 7 is shown by arrows p. The storage device 15 itself can comprise note cassettes of the type shown in the Swedish patent application SE 9903566-9 and a further development of boxes for coins of the type that is shown in the Swedish patent application SE 0101235-0. Of course, other types of payment-handling apparatus can also be used, which apparatus is designed to control items 7 in and out of a storage device 15 in a shop 13 according to denomination.

The inputting and issuing unit 19 is controlled in turn by signals from a computer 23 comprising an item recording unit 25. This item recording unit 25 records input and issued items 7 at item level for comparison with a requested amount obtained from a cash register 27. The cash register 27 is connected to the apparatus via cables 29. Of course, the transmission of data can also be carried out by wireless means. The computer 23 has, among other things, memory devices (not shown) comprising stored program routines for interpreting data of the type shown in the abovementioned EP-A-0 615 643.

The inputting and issuing unit 19 comprises a control device 31 designed to be able to be connected via cables to the said storage device 15 and to the item recording unit 25 arranged at the point of sale for controlling the issue of items 7 at item level.

A central database unit 33 is arranged in the shop 13 for storing data relating to the total number of items 7 that are physically in stock in the shop 13 in real time. The item recording unit 25 is thus designed to work in conjunction with the central database unit 33 for recording in real time the number of input and issued items 7 and the total number of items 7 stored in the shop 13 at item level according to denomination. The recording comprises information relating to the number of items 7 according to denomination. Other information, such as amount, cash movements, value, counterfeit notes, refused withdrawals, etc, can also be included in the information, but this information is not of relevance for the present system.

The detector 21 records physically the number of notes 3 and coins 5 that pass the apparatus 17 and documents electronically at item level the number of passing items 7 in the respective denominations and transmits this information in real time to the central database unit 33 via the item recording unit 25.

The central database unit 33 is located at central level in the shop 13. When the customer 9 pays for example SEK 450 for his goods (not shown), which amount is given as a requested amount, with a SEK 500 note, a cashier (not shown) feeds the note 3 into the payment-handling apparatus 17 after she has received it from the customer 9. Data regarding the amount is transmitted electronically to the cash register 27, and data regarding the number of notes according to denomination is transmitted to the item recording unit 25 via the detector 21. The cash register 27 calculates the difference between the amount paid in and the requested amount and sends a payment order to the apparatus 17, after which a SEK 50 note is issued. The task of the item recording unit 25 is thus to record the number of input and issued notes 3 and coins 5 according to denomination and to calculate the total number of notes 3 and coins 5 currently stored in the apparatus 17 according to denomination. The information concerning the current number of items 7 according to denomination is stored in the central database unit 33 using the respective item recording unit 25 in each apparatus 17. In this way, the shop's 13 whole physical stock of notes 3 and coins 5 can be monitored at central level in the shop 13 in real time.

In this way, using a pre-programmed computer program, a shopkeeper can obtain information in real time about the total number of notes 3 and coins 5 in the shop 13. For example, a printout can be generated three times a day showing the total number of items 7 in stock. In this way, the shopkeeper can plan his purchase of notes 3 and coins 5 and know when it is time to transport the items 7 to a bank. Similarly, using the system 1, he can obtain statistics regarding the flow of notes 3 and coins 5 to and from the shop 13 using an appropriate computer program.

The central database unit 33 is arranged to work in conjunction with a computer unit 37 in a remote financial institution 39, such as a bank or the like, via a data link 35. The data link 35 comprises a cable for transmitting output data 41 from the central database unit 33 to the computer unit 37 in real time. The said output data 41 is processed by the database unit 33 and stored in an internal database 43 arranged in the bank and comprises information concerning the current number of notes 3 and coins 5 stored in the storage device 15 according to denomination. In this embodiment, the information comprises only data concerning the total number of items 7 stored in the shop 13 according to denomination.

The said output data 41 transmitted from the shop 13 to the bank enables the bank to obtain information about the precise number of notes 3 and coins 5 to which the bank's customers (that is to say the customer 9) have access in real time, while at the same time the shopkeeper can obtain interest on capital in real time.

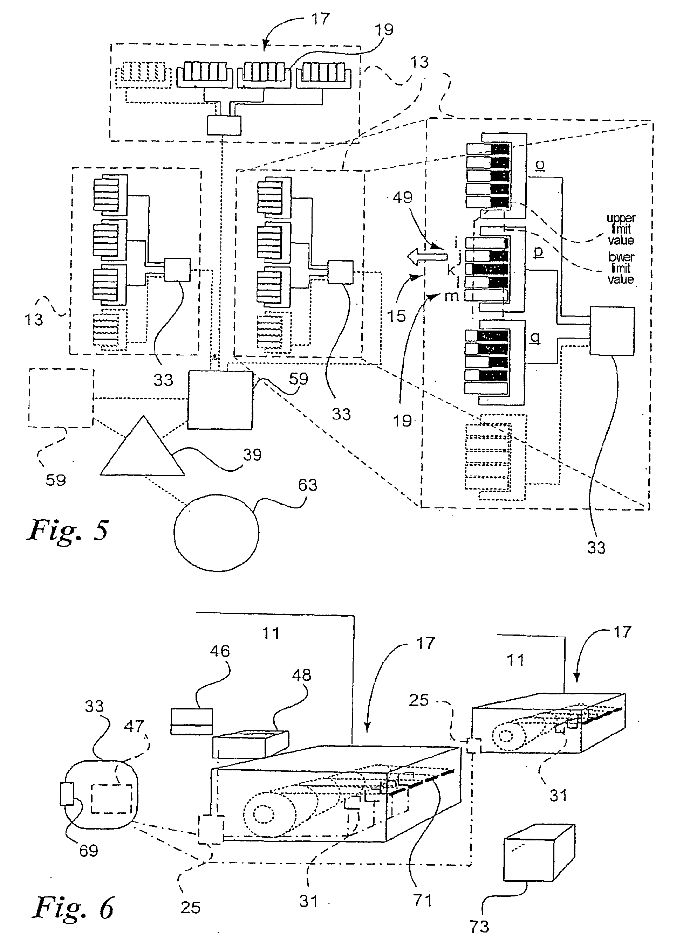

The shop 13 comprises at least one verification unit 48, such as an electronic card reader 45, designed to enable customers to withdraw notes 3 and coins 5 from the storage device 15. This card reader 45 is located close to the checkout 11 and is arranged to work in conjunction with a control unit 47 connected to the central database unit 33 and is designed to be able to be connected for electronic communication with a verifying device 54 in the remote bank for verifying and approving the withdrawal of items 7 by the customer 9. The central database unit 33 is connected to the control unit 47, which units together constitute a central unit 50. The shopkeeper obtains from the central database unit 33 information about the flow of notes 3 and coins 5 at item level from the shop 13 in real time. The total number of items 7 in the shop 13 is related to the total withdrawal of items 7 from the different checkouts 11 (see Figure 6), whereby the stock of items 7 can be reduced in comparison with known technology. When a storage unit 49, also called the handling apparatus, intended for a particular denomination is full, the items 7 of this denomination are emptied into a buffer store 51, such as a safe, and then transported to the bank. The storage of items is carried out at item level in storage cassettes 52 designed for the items 7. A warning signal for emptying or replenishing of items 7 can be generated if required, which will be described in greater detail below. A recording unit 53 is arranged in the buffer store 51 for transferring data relating to the current number of stored items 7 at item level to the central database unit 33.

The financial institution 39 comprises a safe 55 from which change is physically transferred to the shop's 13 storage device 15. The control unit 47 is arranged to control the flow of change when issuing items 7 at the checkout 11 on the basis of the current number of notes and coins stored, in such a way that notes 3 and coins 5 of denominations that have a tendency to run out at the checkout 11 are issued as a second choice. A method for issuing is described in the abovementioned concurrent application.

Figures 2a-2c show schematically in diagram form the flow of items 7 of a particular denomination in a shop 13.

Figure 2a shows how items 7 of a denomination, for example SEK 20 notes, have a tendency to reduce in number to n over the time t in the shop 13 as a whole. This information for the respective storage unit 49 is stored in the central database unit 33. At a time a, a warning value, in the form of a lower limit value ug, causes the control unit 47, via the control device 31 arranged in the apparatus 17, to control the flow of change in the form of SEK 20 notes in such a way that other denominations are primarily issued. For example, if change to the customer 9 is SEK 20, the control unit 47 controls the issuing so that two SEK 10 notes are paid out instead. In this way, the purchase of items 7, that is to say SEK 20 notes, from the financial institution 39, is delayed, which is cost effective.

An exhaustion value sv in combination with the lower limit value ug is determined, to give a signal (not shown) to the control unit 47 if the number of items 7 reduces to the extent that replenishment of the storage unit 49 must take place. When both the values are reached, a preliminary warning is generated that items are about to run out. The central database unit 33 provides information to the effect that there is another storage unit 49 with a surplus of SEK 20 notes, whereupon the cashier is given an instruction to transfer SEK 20 notes from this storage unit 49 to the checkout 11 with a shortage of SEK 20 notes at the time b.

Figure 2b shows how items 7 of a denomination, let us say SEK 500 notes, have a tendency to increase in number over the time t in the shop 13. An upper predetermined upper limit value ög relating to the number of items 7 in the shop 13 has been passed at the time a. After a paying out order from the electronic card reader 45 for a customer withdrawal of items 7, the control unit 47 causes the control device 31 to issue primarily SEK 500 notes. By this means, change for paying back to a customer 9 can be controlled in such a way that the number of notes 3 and coins 5 of denominations that have a tendency to increase quickly in number, increases in number at a slower rate than with checkout systems according to known technology. The shop's total stock of items can be reduced by stimulating the withdrawal of cash in immediate proximity to the checkout 11, which has proved to be advantageous, whereas only the higher denominations are withdrawn by customers at, for example, a cash dispenser of the traditional type.

Figure 2c shows two diagrams, of which the upper diagram shows known technology and the lower diagram shows the flow achieved by the control unit 47. To make it clearer, only variations in the flow of three different denominations are shown, marked by solid, broken and dotted lines. As shown, the respective storage units 49 according to known technology must be emptied and replenished with items 7 more often than with the use of the present system 1. Emptying and replenishment of items is carried out at the times a1, a2 and a3 in the upper diagram. In comparison with the lower diagram, known technology involves a greater amount of labour and complicated storage of items 7, whereas the system 1 reduces the frequency of emptying and replenishment of items 7.

The bank can thus own notes 3 and coins 5 "on site" in the shop 13 using the system 1, in which the central database unit 33 provides information concerning how many notes 3 and coins 5 there are in total in stock in the shop 13 in real time broken down by denomination.

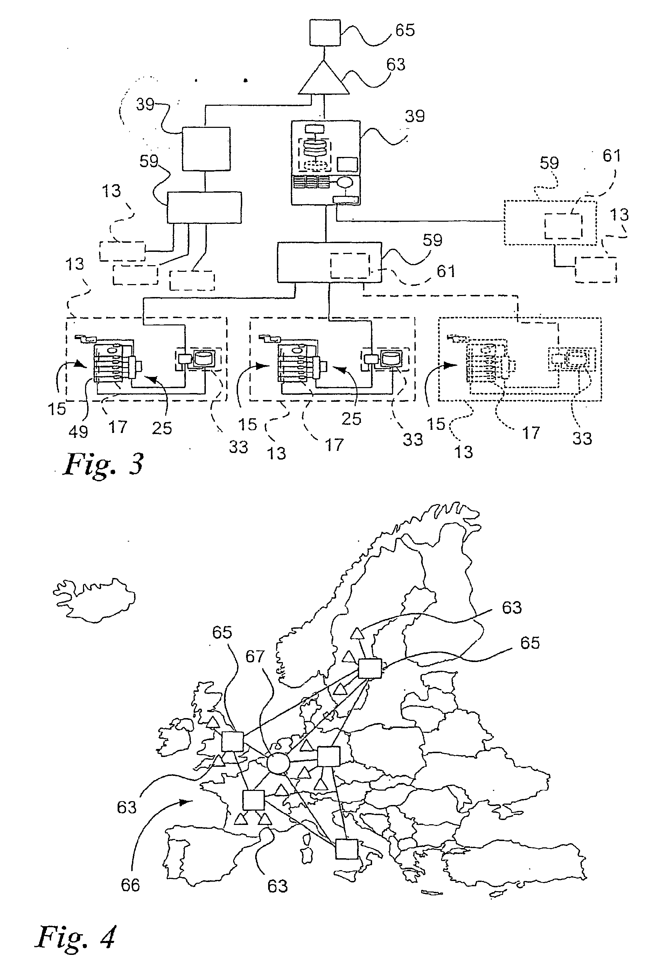

Figures 3 and 4 show the system 1 according to a second embodiment with a plurality of shops 13, each comprising a central database unit 33 and at least one payment-handling apparatus 17 comprising a storage device 15. The shops 13 belong to a chain of shops and are connected to a central server 59 comprising a database device 61 for recording in real time the physical number of items 7 stored in all the shops 13 at item level. The central server 59 is designed for interworking between shops 13 within a region, each comprising a central database unit 33. The buffer store 51 in the respective shop 13 is not illustrated in Figure 3.

The information concerning the number of items stored in the shops 13 is transmitted in real time to a financial institution 39 at regional level. A plurality of banks at regional level are connected to a central bank 63, which in turn is connected to a national bank 65. In this way, the national bank 65 in a country is provided with information concerning the number of notes 3 and coins 5 stored in shops at national level.

Figure 4 shows a network 66 of interconnected national banks 65 within a union in which each country uses the same currency. The national banks 65 in each country are connected to a central bank 67 arranged for the union at union level. Each storage device 15, comprising the storage units 49, such as the abovementioned cassettes and boxes, each designed for each denomination valid in a country, state or union, for storing notes 3 and coins 5 according to denomination, which storage units 49 are designed to be able to be connected at the checkout 11 to the central database unit 33, can thus transmit information concerning the number of stored notes 3 and coins 5 in real time to the central bank 67 arranged for the union.

Each central database unit 33 has been designed with a logistics function, that ensures that the information concerning the number of notes and coins according to denomination is provided to higher hierarchical levels, such as the central server 59.

By means of uniformity in the design of the storage devices 15, great benefits can be obtained in the system 1 if a common currency, such as the Euro, is used in shops 13 constituting a chain of shops with shops 13 located in a plurality of European countries.

Figure 5 shows in greater detail the system 1 shown in Figure 4 at shop level. Each shop 13 comprises a plurality of apparatus 17 comprising inputting and issuing units 19. In the figure, for the sake of clarity, only five storage units 49 are shown, designed for the denominations i, j, k, l and m. The solid columns illustrate the number of items 7 stored in the respective apparatus 17 at each checkout o, p and q. If the customer 9 uses his electronic cash withdrawal card 46 to withdraw an amount that corresponds to notes 3 of the denomination j and the number of notes 3 of the denomination k has passed the upper limit ög, the control unit 47 causes the apparatus 17 to issue notes 3 of the denomination k corresponding to the amount.

The control unit 47 is thus arranged to control the flow of notes 3 and coins 5 regarding the issuing at the checkout 11 on the basis of the current number of notes 3 and coins 5 stored in the storage device 15.

Figure 6 shows schematically two pieces of apparatus 17, also called self-contained apparatus for handling notes and coins in the abovementioned concurrent application. An apparatus designed for alternating input and issuing of notes 3 is described in EP 0 615 643. Apparatus for handling coins 5 are to be found at present according to known technology. The figure shows schematically how the central database unit 33 is connected to the item recording unit 25 and control device 31 of the respective apparatus 17. The central database unit 33 is connected to a display 69 for reading off the total number of items 7 stored in the shop 13 in real time.

The customer 9 pays to the cashier the requested amount for the goods (not shown) purchased in the shop 13. Often the customer 9 hands over to the cashier an amount larger than the requested amount and then waits for change. The cashier feeds in the items 7 received as payment from the customer 9 through openings 71 in the apparatus 17. In order for the apparatus 17 to be able to carry out its tasks, it obtains details of the information that the cash register 27 handles, such as the requested amount and the input amount.

The apparatus 17 comprising the control unit 47 is designed for controlling the input and issuing of items 7 to and from the storage device 15. The figure shows the verification unit 48 for customer withdrawals, which verification unit 48 is connected to the control unit 47 for issuing items 7 corresponding to the amount withdrawn. In this way, the shop 13 can delay the physical transportation of items 7 to the financial institution 39. At the same time, the customer 9 can withdraw money in the immediate vicinity of the checkout 11.

The storage device 15 is arranged to be able to be emptied of money into a transportation box 73, via the openings 71 arranged for the said inputting and issuing of each denomination.

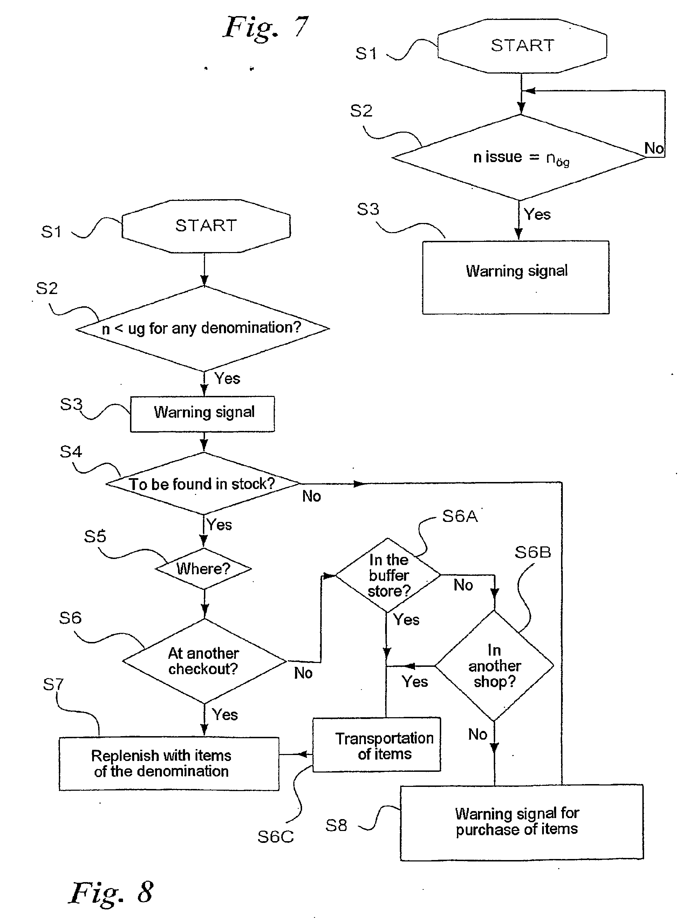

Figure 7 shows a schematic flow chart in which the control unit 47 is arranged for controlling items from the storage device for cash withdrawals and for giving of change, in such a way that when a storage unit 49 starts to become full, items 7 in this storage unit 49 are primarily issued.

In a step S1, the procedure starts with a payment order from the cash register and/or the verification unit 48. In a step S2, it is investigated whether the issuing of items corresponds to the denomination of items which increase in number and pass or approach the upper limit value ög. If the conditions in steps S1 and S2 are not fulfilled, the amount b is paid out using a purpose-designed program routine, so that the paying out is carried out by means of a minimum of items.

In a step S3, items of the denomination that has a number of items which passes the upper limit value ög are primarily issued, according to a suitable program routine.

Figure 8 shows a flow chart for replenishing items that have a tendency to run out at a checkout 1 or in a shop 13.

The control unit 47 is arranged to give a warning signal if the lower limit value ug is passed or approached when the number of items 7 of a particular denomination reduces in number in a storage unit 49.

In this way, on the basis of this warning signal, the shopkeeper has ample time to prevent a shortage of change, well before the storage unit 49 is emptied of items 7. He can thus obtain information about whether it is time to transfer the notes 3 or coins 5 of which there is a shortage from another checkout 11 or from the buffer store 51, to the checkout 11 with a shortage of a particular denomination. The function can also be deployed at regional level, where a shop 13 with a surplus of items 7 of a denomination can transfer some of these to a shop 13 with a shortage of items 7 of the same denomination.

In a step S1, the procedure starts with a payment order from the cash register and/or the verification unit 48. In a step S2, it is investigated whether the number n of items of a denomination, for example the denomination i shown schematically in Figure 5, is less than the lower limit value ug. If this is the case, a warning signal is generated in a step S3.

The warning signal is sent to the control unit 47 to control the flow during issuing so that items 7 of other denominations than the denomination i are primarily issued from the other storage devices in the shop 13. In this way, the transportation of items to the shop can be delayed. In a step S4, it is checked whether there are items of denomination i in stock. If this is not the case, an alarm signal is generated for the purchase of items according to a step S8. If there are items in stock, it is checked first whether these are to be found in the storage devices 15 of any other checkout 11 in step S6. If this is not the case, a check is carried out automatically by means of a suitable program routine stored in the control unit 47 whether items of which there is a shortage are to be found in the buffer store 51 in a step S6A. If this is not the case, an alarm signal is generated according to step S8. In a step S6C, the items of which there is a shortage at a checkout 11 are transported from the buffer store 51 to the checkout 11 where there is a shortage of items 7. In a step S7, the checkout 11 is replenished with items of the denomination of which there is a shortage. In this way, expensive labour is eliminated, where the cashier would otherwise discover too late that there are no items of a particular denomination at the checkout 11.

Assume that the number of SEK 100 notes, that according to the central database unit 33 are to be found in stock in the shop, that is to say in the storage device, is 1000 in total. Five input SEK 100 notes are recorded and the total stock of SEK 100 notes will now be 1005. This recording is carried out in real time and shows the shop's total stock of SEK 100 notes without any delay.

In addition, information is sent from the cash register 27 to the item recording unit 25 to the effect that, for example, SEK 60 is to be paid back to the customer 9. Suppose that the stock of SEK 20 notes is 1000 and the number of items of the other denominations has passed the lower limit value, then a suitable program routine will cause the issuing of items 7 in such a way that three SEK 20 notes are paid back as change. The total number of notes 3 in the shop's stock of SEK 20 notes is now 997, which information is provided to the central database unit 33 in conjunction with the item recording unit 25.

The next customer perhaps only wants to make a withdrawal of SEK 500 from the storage device 15 at a different checkout 11 to the preceding customer 9. The total stock of SEK 500 notes is 200 and of SEK 100 notes is 1000. As no further transactions have been carried out in the shop 13 since the preceding customer 9, the central database unit 33 shows a stock in the shop 13 of, in total, 200 SEK 500 notes, 1000 SEK 100 notes and 997 SEK 20 notes. Before the paying out of SEK 500, a purpose-designed program routine in the control unit 47 will ensure that five SEK 100 notes are issued instead of one SEK 500 note, as the number of SEK 100 notes has passed the predetermined upper limit value ög.

During the time a shop comprising a traditional system of cash registers 27 is open during the day, the stock of notes 3 and coins 5 increases. The present system 1 for handling notes 3 and coins 5 in a shop 13 has been assigned the item recording unit 25 for working in conjunction with the central database unit 33 for control of the current stock of notes 3 and coins 5 and for distributing items 7 to other shops, both at local level and at regional level.

Alternatively, the transmission of data can, of course, be carried out via satellite and the information can also comprise other data than just the number of items. A combination of the different embodiments and similar variants are, of course, within the framework of the present invention.

Similarly, the system for storage of items, such as notes and coins, which are transferred to and from customers at at least one point of sale, such as a checkout in a shop, which system comprises at least one storage device for storing the said notes and coins according to denomination, input and issuing units designed to be able to be connected to the said storage device and an item recording unit arranged at the said point of sale, can be characterized in that the item recording unit is designed to work in conjunction with a central database unit for recording the number of input and issued items and the total number of items stored in the shop at item level according to denomination.

## Claims

1. System for storage of notes (3) and coins (5), also called items (7), which are transferred to and from customers (9) at at least one point of sale, such as a checkout (11) in a shop (13), which system (1) comprises at least one storage device (15) for storing the said notes (3) and coins (5) according to denomination, input and issuing units (19) designed to be able to be connected to the said storage device (15) and an item recording unit (25) arranged at the said point of sale, said items (7) are each detected when it is input or issued for recording the accumulated number of items (7) in said storage device (15), **characterized in that** the said item recording unit (25) is connected to and is designed to work in conjunction with a central database unit (33) for recording in real time the number of input and issued items (7) and the total number of items (7) stored in the shop (13) at item level according to denomination, and that the said central database unit (33) is assigned a control unit (47) designed to control the flow of issued notes (3) and coins (5) at the said point of sale on the basis of the number of notes (3) and coins (5) currently stored in the storage device (15).

2. System according to Claim 1, **characterized in that** the said central data base unit (33) is designed to work in conjunction with a computer unit (37) in a remote financial institution (39), such as a bank or the like, via a data link (35) for transferring -output data (41) in real time from the said central database unit (33) to the said computer unit (37), which output data (41) comprises information showing the current number of notes (3) and coins (5) stored in the storage device (15) according to denomination.

3. System according to Claim 1 or 2, **characterized in that** the said point of sale comprises a verification unit (48) designed for the withdrawal of notes (3) and coins (5) from the said storage device (15) by customers, which verification unit (48) is arranged to work in conjunction with the said control unit (47) for controlling the issuing of notes (3) and coins (5) on the basis of the withdrawal by the customer and can be connected by electronic communication to the said remote financial institution (39) for verifying the withdrawal by the customer (9).

4. System according to Claims 1-3, **characterized in that** the said storage device (15) comprises storage units (49), each designed for the currency of the country, state or union, for storing notes (3) and coins (5) according to denomination.

5. System according to any one of the preceding claims, **characterized in that** the said control unit (47) is designed to control the flow of notes (3) and coins (5) out of the respective storage devices (15), in such a way that when the number of notes (3) and coins (5) of a particular denomination increases in number and passes or approaches an upper limit value (ög), the said control unit (47) is caused to pay out notes (3) and coins (5) primarily of this denomination when a customer makes a withdrawal.

6. System according to any one of claims 1-4, **characterized in that** the said control unit (47) is designed to give a warning signal on basis of which a shopkeeper has ample time to prevent a shortage of change, if a lower limit value (ug) is passed or approached when the number of notes (3) or coins (5) of a particular denomination reduces in number in the respective storage unit (49).

7. System according to any one of the preceding claims, **characterized in that** the said storage device (15) is designed to be able to be emptied of items (7) into a transportation box (73), via openings (71) arranged for the said inputting and issuing of each denomination.

8. System according to any one of the preceding claims, **characterized in that** the said central database unit (33) is arranged in the said shop (13).

9. System according to any one of the preceding claims, **characterized in that** the central database unit (33) is arranged to work in conjunction with a central server (59) designed for interworking between the said shops (13) within a region.

## Patentansprüche

1. System zur Verwahrung von Geldscheinen (3) und Münzen (5), die auch als Artikel (7) bezeichnet werden, die an und von Kunden (9) an mindestens einer Verkaufsstelle wie einer Kasse (11) in einem Laden (13) übereignet werden, wobei das System (1) mindestens eine Verwahrvorrichtung (15) zur Verwahrung der Geldscheine (3) und Münzen (5) nach Nennwert, Eingabe- und Ausgabeeinheiten (19), die so gestaltet sind, daß sie mit der Verwahrvorrichtung (15) verbunden werden können, und eine Artikelaufzeichnungseinheit (25) aufweist, die an der Verkaufsstelle angeordnet ist, wobei die Artikel (7) jeweils erfaßt werden, wenn sie eingegeben oder ausgegeben werden, um die angesammelte Anzahl der Artikel (7) in der Verwahrvorrichtung (15) aufzuzeichnen, **dadurch gekennzeichnet, daß** die Artikelaufzeichnungseinheit (25) mit einer zentralen Datenbankeinheit (33) verbunden ist und gestaltet ist, in Verbindung mit ihr zu arbeiten, um in Echtzeit die Anzahl der eingegebenen und ausgegebenen Artikel (7) und die Gesamtzahl der Artikel (7), die im Laden (13) verwahrt werden, auf Artikelebene gemäß des Nennwerts aufzuzeichnen, und daß die zentrale Datenbankeinheit (33) einer Steuereinheit (47) zugeordnet ist, die dazu bestimmt ist, den Fluß von ausgegebenen Geldscheinen (3) und Münzen (5) an der Verkaufsstelle auf der Grundlage der Anzahl der Geldscheine (3) und Münzen (5) zu steuern, die gegenwärtig in der Verwahrvorrichtung (15) aufbewahrt werden.

2. System nach Anspruch 1, **dadurch gekennzeichnet, daß** die zentrale Datenbankeinheit (33) gestaltet ist, über eine Datenverbindung (35) zur Übertragung von Ausgangsdaten (41) in Echtzeit von der zentralen Datenbankeinheit (33) zur Computereinheit (37) in Verbindung mit einer Computereinheit (37) in einem entfernten Finanzinstitut (39), wie einer Bank oder dergleichen zu arbeiten, wobei die Ausgangsdaten (41) Informationen aufweisen, die die gegenwärtige Anzahl der Geldscheine (3) und Münzen (5), die in der Verwahrvorrichtung (15) aufbewahrt werden, gemäß ihres Nennwerts zu zeigen.

3. System nach Anspruch 1 oder 2, **dadurch gekennzeichnet, daß** die Verkaufsstelle eine Prüfeinheit (48) aufweist, die für die Entnahme von Geldscheinen (3) und Münzen (5) aus der Verwahrvorrichtung (15) durch Kunden bestimmt ist, wobei die Prüfeinheit (48) eingerichtet ist, in Verbindung mit der Steuereinheit (47) zu arbeiten, um die Ausgabe von Geldscheinen (3) und Münzen (5) auf der Grundlage der Entnahme durch den Kunden zu steuern, und durch eine elektronische Verbindung mit dem entfernten Finanzinstitut (39) verbunden sein kann, um die Entnahme durch den Kunden (9) zu prüfen.

4. System nach Anspruch 1-3, **dadurch gekennzeichnet, daß** die Verwahrvorrichtung (15) Verwahreinheiten (49) aufweist, die jeweils für die Währung des Landes, Staates oder Union bestimmt sind, um Geldscheine (3) und Münzen (5) gemäß ihres Nennwerts aufzubewahren.

5. System nach einem der vorhergehenden Ansprüche, **dadurch gekennzeichnet, daß** die Steuereinheit (47) dazu bestimmt ist, den Fluß von Geldscheinen (3) und Münzen (5) aus den jeweiligen Verwahrvorrichtungen (15) in einer solchen Weise zu steuern, daß wenn die Anzahl der Geldscheine (3) und Münzen (5) eines bestimmten Nennwerts an der Zahl zunimmt und einen oberen Grenzwert (ög) passiert oder sich ihm nähert, die Steuereinheit (47) veranlaßt wird, hauptsächlich Geldscheine (3) und Münzen (5) dieses Nennwerts auszuzahlen, wenn ein Kunde eine Entnahme vornimmt.

6. System nach einem der Ansprüche 1-4, **dadurch gekennzeichnet, daß** die Steuereinheit (47) gestaltet ist, ein Warnsignal abzugeben, auf dessen Grundlage ein Ladeninhaber genügend Zeit hat, einen Mangel an Wechselgeld zu verhindern, wenn ein unterer Grenzwert (ug) passiert oder erreicht wird, wenn sich die Anzahl von Geldscheinen (3) oder Münzen (5) eines bestimmten Nennwerts an der Zahl in der jeweiligen Verwahreinheit (49) reduziert.

7. System nach einem der vorhergehenden Ansprüche, **dadurch gekennzeichnet, daß** die Verwahrvorrichtung (15) so gestaltet ist, daß Artikel (7) über Öffnungen (71), die für die Eingabe und Ausgabe jedes Nennwerts angeordnet sind, in einen Transportbehälter (73) entleert werden können.

8. System nach einem der vorhergehenden Ansprüche, **dadurch gekennzeichnet, daß** die zentrale Datenbankeinheit (33) im Laden (13) angeordnet ist.

9. System nach einem der vorhergehenden Ansprüche, **dadurch gekennzeichnet, daß** die zentrale Datenbankeinheit (33) eingerichtet ist, in Verbindung mit einem zentralen Server (59) zu arbeiten, der zur Zusammenarbeit zwischen den Läden (13) in einer Region bestimmt ist.

## Revendications

1. Système pour le rangement de billets (3) et de pièces (5), également appelés articles (7), qui sont transférés à et par des clients (9) au niveau d'au moins un point de vente, tel qu'une caisse (11) dans un magasin (13), lequel système (1) comprend au moins un dispositif de rangement (15) pour ranger lesdits billets (3) et pièces (5) conformément à une dénomination, des unités d'entrée et de sortie (19) conçues pour pouvoir être connectées audit dispositif de rangement (15) et une unité d'enregistrement d'articles (25) agencée au niveau dudit point de vente, lesdits articles (7) étant chacun détectés lorsqu'ils sont entrés ou sortis pour enregistrer le nombre cumulé d'articles (7) dans ledit dispositif de rangement (15), **caractérisé en ce que** ladite unité d'enregistrement d'articles (25) est connectée à et est conçue pour fonctionner conjointement avec une unité de base de données centrale (33) pour enregistrer en temps réel le nombre d'articles (7) entrés et sortis et le nombre total d'articles (7) rangés dans le magasin (13) à un niveau d'articles conformément à une dénomination, et **en ce qu'**une unité de contrôle (47) conçue pour contrôler la circulation de billets (3) et de pièces (5) sortis au niveau dudit point de vente sur la base du nombre de billets (3) et de pièces (5) actuellement rangés dans le dispositif de rangement (15) est attribuée à ladite unité de base de données centrale (33).

2. Système selon la revendication 1, **caractérisé en ce que** ladite unité de base de données centrale (33) est conçue pour fonctionner conjointement avec une unité informatique (37) dans un établissement financier à distance (39), tel qu'une banque ou similaire, par l'intermédiaire d'une liaison de données (35) pour transférer des données de sortie (41) en temps réel de ladite unité de base de données centrale (33) à ladite unité informatique (37), lesquelles données de sortie (41) comprennent des informations indiquant le nombre actuel de billets (3) et de pièces (5) rangés dans le dispositif de rangement (15) conformément à une dénomination.

3. Système selon la revendication 1 ou 2, **caractérisé en ce que** ledit point de vente comprend une unité de vérification (48) conçue pour le retrait de billets (3) et de pièces (5) dudit dispositif de rangement (15) par des clients, laquelle unité de vérification (48) est agencée pour fonctionner conjointement avec ladite unité de contrôle (47) pour contrôler la sortie de billets (3) et de pièces (5) sur la base du retrait par le client et peut être connectée par une communication électronique audit établissement financier à distance (39) pour vérifier le retrait par le client (9).

4. Système selon les revendications 1 à 3, **caractérisé en ce que** ledit dispositif de rangement (15) comprend des unités de rangement (49), conçues chacune pour la monnaie du pays, de l'état ou de l'union, pour ranger des billets (3) et des pièces (5) conformément à une dénomination.

5. Système selon l'une quelconque des revendications précédentes, **caractérisé en ce que** ladite unité de contrôle (47) est conçue pour contrôler la circulation de billets (3) et de pièces (5) hors des dispositifs de rangement (15) respectifs, de manière à ce que, lorsque le nombre de billets (3) et de pièces (5) d'une dénomination particulière augmente en nombre et dépasse ou s'approche d'une valeur limite supérieure (ög), ladite unité de contrôle (47) est amenée à délivrer des billets (3) et des pièces (5) essentiellement de cette dénomination lorsqu'un client effectue un retrait.

6. Système selon l'une quelconque des revendications 1 à 4, **caractérisé en ce que** ladite unité de contrôle (47) est conçue pour donner un signal d'alarme sur la base duquel un commerçant a suffisamment de temps pour éviter un manque de monnaie, si une valeur limite inférieure (ug) est dépassée ou approchée lorsque le nombre de billets (3) ou de pièces (5) d'une dénomination particulière diminue en nombre dans l'unité de rangement (49) respective.

7. Système selon l'une quelconque des revendications précédentes, **caractérisé en ce que** ledit dispositif de rangement (15) est conçu pour que des articles (7) puissent être transférés dans une boîte de transport (73), par l'intermédiaire d'ouvertures (71) agencées pour lesdites entrée et sortie de chaque dénomination.

8. Système selon l'une quelconque des revendications précédentes, **caractérisé en ce que** ladite unité de base de données centrale (33) est agencée dans ledit magasin (13).

9. Système selon l'une quelconque des revendications précédentes, **caractérisé en ce que** l'unité de base de données centrale (33) est agencée pour fonctionner conjointement avec un serveur central (59) conçu pour l'interfonctionnement entre lesdits magasins (13) dans une région.
